Europäisches Patentamt

(19) European Patent Office

Office européen des brevets

(11) Publication number: **0 110 323**
A1

## (12) EUROPEAN PATENT APPLICATION

(21) Application number: **83111734.6**

(22) Date of filing: **23.11.83**

(51) Int. Cl.³: **G 11 B 17/02**

(30) Priority: **26.11.82 US 444612**

(71) Applicant: **Tabor Corporation, 3 Littleton Road, Westford Massachusetts (US)**

(72) Inventor: **Barton, Richard E., 187 Kent St., Scituate Massachusetts (US)**
Inventor: **Holmes, William A., 7 Bradlee Road, Marblehead Massachusetts (US)**

(43) Date of publication of application: **13.06.84 Bulletin 84/24**

(74) Representative: **Blumbach Weser Bergen Kramer Zwirner Hoffmann Patentanwälte, Radeckestrasse 43, D-8000 München 60 (DE)**

(84) Designated Contracting States: **DE FR GB IT**

(54) **Disk drive.**

㊹ A drive for a magnetic disk memory features a receiver (14) for carrying a memory disk (12) into and out of the instrument with a simple movement and with operator ease, and features a simple precision assembly of the drive motor (18), mounting chassis (26), and read-write transducer carriage (112). The assembly enhances accurate and precise positioning of the transducer relative to a memory disk. The structure of the disk drive is suitable for use with recording disks of unusually small diameter.

Tabor Corporation 10.169 EPC

Massachusetts, U.S.A.

## DISK DRIVE

### BACKGROUND

This invention relates to a drive for a magnetic disk memory. One preferred embodiment is a drive of relatively miniature construction for a flexible memory disk of correspondingly small diameter.

Disk drives for stiffly flexible magnetic memory disks, so-called floppy disks, are well known. There is, however, a continuing effort to reduce the size and cost of these devices and to enhance the accuracy and precision with which the read/write transducer is located relative to the memory disk.

Conventional disk drives operate with relatively large floppy disks, typically of either eight inch diameter or five inch diameter. With the continuing miniaturization of digital computers and the increased application of such computers to portable and other small-sized applications, it has become desirable to develop a disk drive for a smaller memory disk, with a size at least below four inches in diameter. The foregoing transducer-disk positioning objectives are increasingly difficult to obtain, however, in drives for such small disks.

It accordingly is an object of this invention to provide a structure for a disk drive which is relatively compact, low in cost, and which attains accurate and precise location of the transducer relative to the memory disk. It is a further object to provide such a disk drive structure that is relatively easy to assemble and, further, which operates with relatively high reliability.

Another object of the invention is to provide a disk drive of the above character which is well-suited for use with a small memory disk and particularly a disk having a diameter under four inches.

Other objects of the invention will in part be obvious and will in part appear hereinafter.

## CROSS-REFERENCE TO OTHER APPLICATIONS

This application incorporates by this reference the disclosures in the copending and commonly assigned applications for patent Serial No. 444,610 and 444,611 entitled "Disk Memory Apparatus" and "Anti-Backlash Nut and Head Positioner", respectively, and filed on even date herewith.

## SUMMARY OF THE INVENTION

A disk drive according to this invention operates well with a miniature floppy disk. An embodiment structured for operation with a three and one-quarter inch disk and manufactured in relatively high volume for low cost nevertheless attains a relatively high track density of at least one hundred forty tracks per inch.

Features of the drive include a structure that can be manufactured at relatively low cost and which is easy to assemble and yet which provides highly accurate location of the disk-driving motor chuck relative to the read/write transducer, as is required to attain a relatively high track density with otherwise conventional techniques. The ease of assembling the structure includes a design with relatively few parts which readily fit together and which require few fasteners. In particular, a preferred embodiment of the invention has a one-piece mounting chassis to which the selectively positionable read-write transducer unit mounts, to which the disk driving motor attaches, and with which a disk loading and unloading receiver assembles.

In a preferred embodiment, the separate elements of the drive motor assemble directly to the chassis. Thus, with few precision surfaces, including one for mounting the bearing-carrying motor rotor and chuck, and another for positioning the transducer unit, the chassis attains a consistent high accuracy in the relative location between these two elements that implement the ultimate operating interaction with the memory disk.

Another feature of the invention resides in the receiver, which carries a memory disk into the instrument for operation, and transports a disk out of the instrument for removal, all with simple movements. A direct manual operation provides the movements with significant user ease.

The invention accordingly comprises the apparatus embodying features of construction, combinations of elements, and arrangements of parts exemplified in the following detailed disclosure, and the scope of the invention is indicated in the claims.

BRIEF DESCRIPTION OF DRAWINGS

For a fuller understanding of the nature and objects of the invention, reference should be made to the following detailed description and the accompanying drawings, in which:

FIGURE 1 shows a magnetic disk memory, partly broken away, employing a disk drive according to the invention;

FIGURES 1A and 1B are details of FIGURE 1 showing the relative position of the receiver when seated and when unseated, respectively;

FIGURE 2 is an exploded view of the disk drive of FIGURE 1;

FIGURE 3 shows the disk drive of FIGURE 1 wfth the receiver tray in the unseated position;

FIGURE 4 shows the disk drive of FIGURE 1 with the receiver tray in the seated position;

FIGURES 5 and 6 are simplified side elevation sectional views of the disk drive of FIGURE 1 showing the receiver tray in the seated and the unseated positions, respectively;

FIGURES 7 and 8 are simplified fragmentary top plan views of the disk drive of FIGURE 1 showing the receiver tray respectively in the seated and the unseated positions;

FIGURES 9, 10 and 11 show the selectively positionable read/write transducer unit of the disk drive of FIGURE 1, respectively, in fragmentary side elevation, top plan and end views;

FIGURES 12 and 13 are side elevation views of the transducer carriage of the disk drive of FIGURE 1 and respectively showing the disk replacement and disk engaging positions;

FIGURE 14 is a cross-sectional view of the disk drive of FIGURE 1 showing the direct assembly of the motor elements with the mounting chassis; and

FIGURE 15 is a fragmentary view showing the chassis mounting and location of a slide rail, of the disk drive of FIGURE 1.

DESCRIPTION OF ILLUSTRATED EMBODIMENT

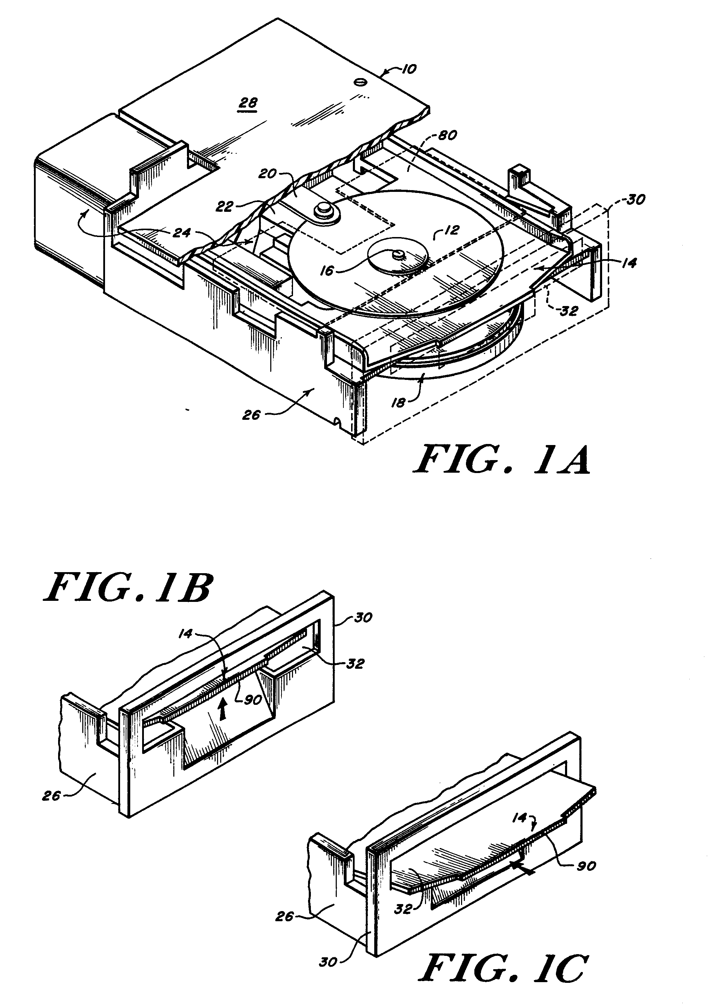

FIGURE 1 shows a disk memory having a disk drive 10 according to the invention and with a flexible magnetic memory disk 12 operatively engaged therein. The disk 12 is seated on a receiver indicated generally at 14 that places the center of the disk on the spindled chuck 16 of a drive motor 18. As is conventional with flexible magnetic memory disks, the disk 12 typically is within a selectively apertured rectangular protective envelope which is omitted from these drawings for clarity of illustration.

The receiver 14 further positions the disk between upper and lower arm-like members 20 and 22 of a selectively-positionable read/write transducer unit, indicated generally at 24. One or more read/write transducers carried on the transducer unit 24 engage a surface of the disk 12 to effect a desired information transfer, e.g. a write operation or a read operation.

The disk drive 10 has a mounting chassis 26 to which other parts and sub-assemblies attach. This includes the receiver 14 and the transducer unit 24, an electrical circuit board 28 and the motor 18. In a typical installation as illustrated, a bezel 30 or like front panel covers the front of the disk drive. The bezel 30 is apertured with a loading slot 32 through which the receiver 14 moves to facilitate the removal of one memory disk and the insertion of another one. FIGURE 1A shows the location of the receiver relative to the bezel 30 when fully seated in the disk drive as in FIGURE 1. FIGURE 1B shows the further forward projection of the receiver in the unseated position.

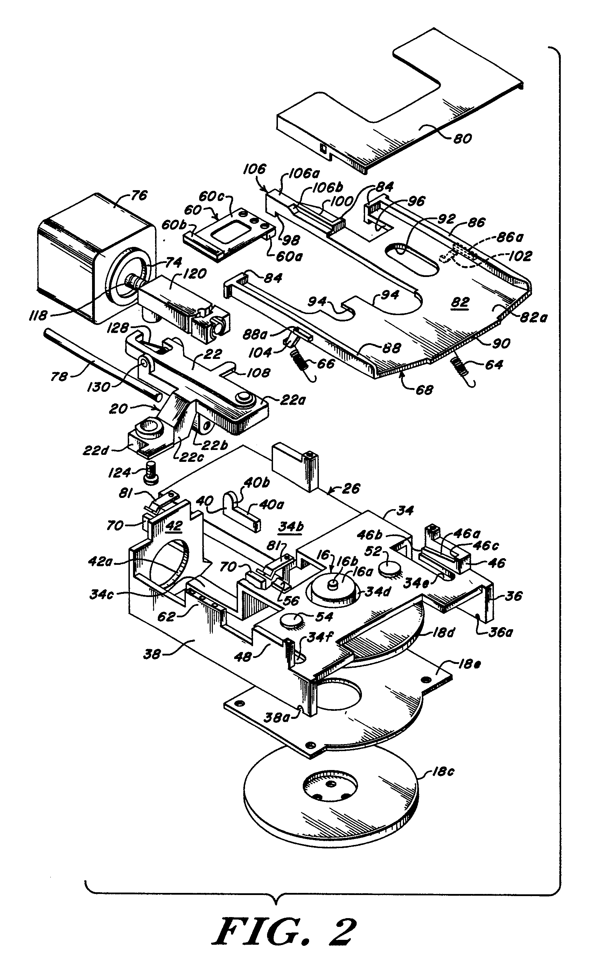

The exploded view in FIGURE 2 of the disk drive 10, from which the circuit board 28 and bezel 30 and disk 12 of FIGURE 1 are omitted for clarity of illustration, shows that the illustrated chassis 26 has a unitary one-piece structure. More particularly, the chassis 26, preferably fabricated by casting and machining, has a platform 34 with a front section 34a spanning between a pair of outer sidewalls 36 and 38. A rear platform section 34b is recesssed below the front section to mount an upwardly-projecting rail 40 that forms one of three slide supports. The platform back section 34b extends only part way between the sidewalls 36 and 38, the remaining span includes a transducer unit-receiving well which includes a further recessed bottom platform section 34c that forms part of the chassis 26 bottom wall, and a rear wall 42 extending between the sidewall 36 and the platform bottom section 34c and to which the transducer unit 24 mounts.

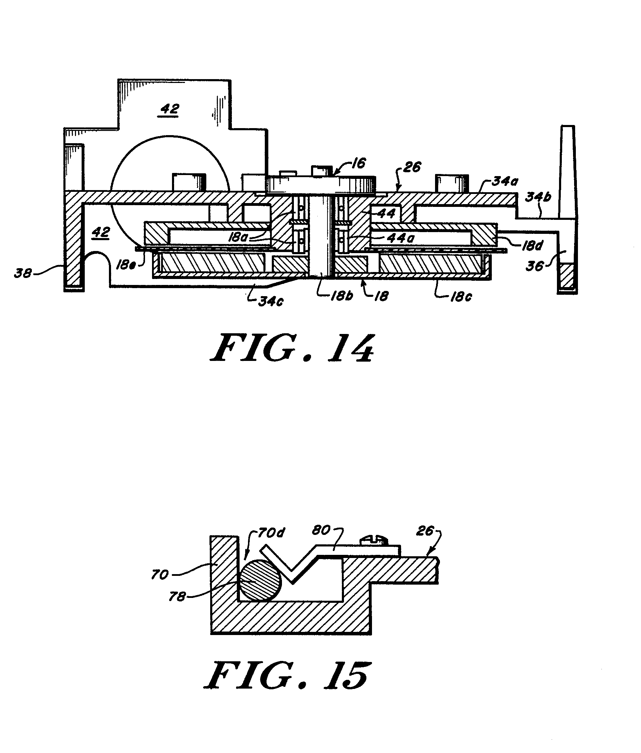

FIGURE 14 further shows that the illustrated chassis 26 has a motor-mounting collar 44 projecting down from the platform front section 34a. The collar has a precision cylindrical inner surface 44a to which the rotating elements of the motor 18 are directly assembled. The illustrated motor 18 is of a conventional pancake motor construction and has a pair of axially-spaced bearings 18a-18a that mountingly seat within the cylindrical surface 44a and rotatably carry a motor shaft 18b. The upper end of the motor shaft 18b forms a spindle that projects above the chassis platform section 34a. The other lower end of the motor shaft 18b carries the rotor 18c of the motor. The motor stator 18d and a motor circuit board 18e also directly mount to the chassis 16 below the platform section 34a about the collar 44.

This mounting of the motor elements separately and directly to the chassis 26 enhances the dimensional accuracy with which the spindled chuck 16 is located relative to the chassis and consequently relative to the transducer unit 24.

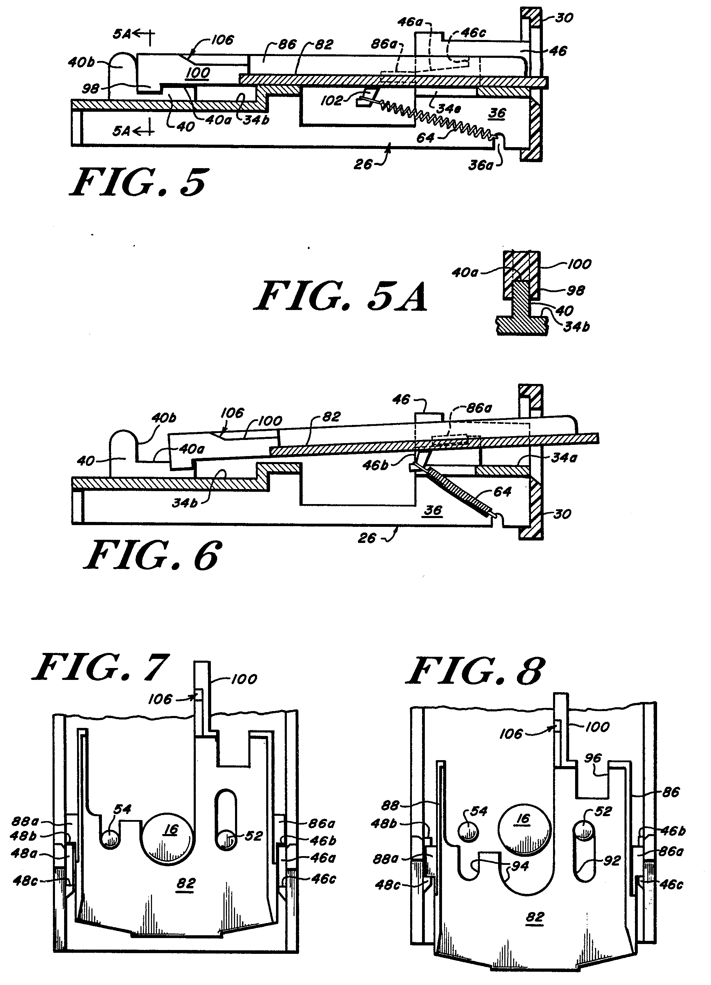

With further reference to FIGURES 1 and 2, the illustrated chassis 26 has an upstanding support on the rear wall 42 and has upward projections on each sidewall 36 and 38. These supports are notched, as shown, to locate and seatingly receive the electrical printed circuit board 28 for mounting it to the chassis 26. One such projection 46 located proximal to the front of the disk drive and on wall 36, and a similarly located projection 48 on the wall 38, also form, together with portions of the platform section 34a, the remaining two of the above-mentioned three slide supports. More particularly, the projection 46 forms a ramp surface 46a above the platform section 34a and inclined upward in the direction toward the front of the disk drive, i.e. to the right in FIGURES 1 and 2. The ramp surface 46a has stop surfaces 46b and 46c at each end thereof. The projection 48 on the opposite side of the disk drive has, as appears in FIGURES 7 and 8, an identical, mirror image construction with an upwardly-inclined slide ramp surface 48a and stop surfaces 48b and 48c at each end thereof.

The other slide support, which the rail 40 forms, has a flat slide surface 40a with a stop surface 40b at the back end thereof.

The three illustrated slide supports formed with the platform section 34a and the projections 46 and 48 and the rail 40 are located at the corners of a roughly equilateral triangle, and the slide surfaces of the ramps 46a and 48a and the rail slide 40a extend parallel to one another. The ramps 46a and 48a are located at identical distances from the front of the chassis 26, whereas the rail 40 is located proximal to the back of the chassis, as shown. As described hereinbelow, these three slide supports guide the movement of the receiver 14 between the seated position shown. in FIGURE 1 and an unseated, disk replacing, position.

The chassis 26 also has, as FIGURE 2 further shows, three disk-supporting pedestals 52, 54 and 56 which project upward from the platform front section 34a. The pedestals 52 and 54 are spaced on either side of an opening 34d in the platform section 34a through which the motor chuck 16 projects. The tops of the three pedestals are coplanar at a location several , thousandths of an inch above an annular chuck surface 16a, and well below the top of the chuck spindle. The other, third pedestal 56 is located rearward of the opening 34d circumferentially adjacent the location where the read/write head of the transducer unit 24 engages a memory disk.

The three pedestals 52, 54 and 56, together with the chuck surface 16a, supportingly receive a memory disk 12 (more commonly the disk housing envelope) to support the weight of the disk in the disk drive 10. The pedestals and the chuck thereby precisely locate the disk recording surfaces in a selected plane for optimum interactions with the read/write transducer.

FIGURE 2 further shows that a resilient pressure pad assembly 60 mounts on a projection 62 of the chassis sidewall 38 to dispose a wiping pad 60a directly over and resiliently pressed against the top of the pedestal 56. The illustrated assembly 60 includes, in addition to the wiping pad 60a, a mounting bar 60b that seats on and fastens to the projection 62, and a leaf spring 60c which mounts the wiping pad 60 to the mounting bar.

The illustrated chassis 26 further has spring anchorages 36a and 38a on each sidewall 36 and 38, respectively. The illustrated anchorages are notches recessing a lower surface of each sidewall closely spaced from the front thereof. Each anchorage 36a and 38a attachingly receives one end of a coil tension spring 64, 66, respectively, that further attaches to a movable tray 68 of the receiver 14. Each spring 64, 66 extends between the tray 68 and its anchorage 36a, 38a through an elongated slot 34e, 34f, respectively, aperturing the platform front section 34a. Each aperture 34e, 34f extends parallel and closely adjacent to, and extends rearwardly beyond, one ramp surface 46a, 48a, respectively, as appears in FIGURE 2 and in FIGURES 5 and 6.

With continued reference to FIGURES 1 and 2, the transducer unit 24 includes a drive device 76 that rotates a lead screw 118 to translate a follower nut 120 to which the arm members 20 and 22 are attached for movement along a guide rod 78. The illustrated chassis 26 locates the transducer unit 24 by a mounting hole 42a in the rear wall 42, which seats the drive device, and by a pair of aligned bracket members 70 (shown in detail in FIGURE 15), which mount the guide rod. Each bracket member 70, preferably integral with the chassis casting, forms a pair of precisely-aligned inside rail-locating corners 70a. The mounting hole 42a receives and precisely locates a locating collar 74 on the transducer positioning drive 76, and the inside corners 70a receive and precisely locate the guide rod 78. As appears in FIGURES 2 and 15, a resilient clip 81 fastens to the chassis platform back section 34b at each inside corner 70a and is notched or detented to resiliently bear against the guide rod 78 and maintain it seated against the two transverse surfaces of that inside corner 70a.

The illustrated chassis 26 thus has a first set of precision machined surfaces which includes the rear-wall mounting hole 42a (FIGURE 2), the inside corners 70a (FIGURE 2) and the motor receiving and locating collar inner surface 44a (FIGURE 14). A second set of precision surfaces are the three slide surfaces 46a, 48a and 40a (FIGURES 2 and 7), and a third set of precision chassis surfaces are the tops of the three pedestals 52, 54 and 56 (FIGURE 2).

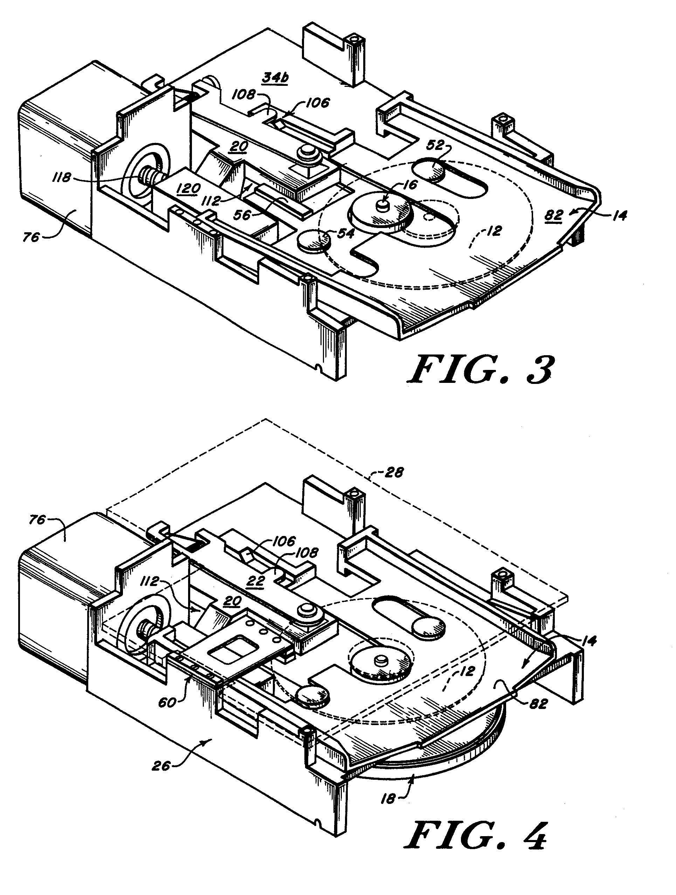

The illustrated receiver 14, as FIGURES 1-4 show, employs the tray 68 and a tray cover 80 (shown in phantom in FIGURE 1), in addition to the springs 64 and 66. The receiver is slidably movable relative to the chassis 26 between two positions. One is a seated position, shown in FIGURE 4, where a disk carried thereon is operative in the disk drive. The other is an unseated position, shown in FIGURE 3, where a disk seated on the receiver is accessible for removal from the disk drive and, alternatively, a fresh disk can be loaded into the disk drive.

The tray 68 has a flat planar tray floor 82 rimmed on three sides by an interrupted back wall 84 and by sidewalls 86 and 88. The three walls are dimensioned to seatingly and locatingly receive a memory disk 12, conventionally as enclosed in a protective envelope. The tray 68 has a manually-engageable lip 90 formed by a forward projection 82a of the tray floor. The floor is apertured and cut away with openings 92 and 94 to accommodate projection therethrough of the chassis pedestals 52 and 54 and of the motor chuck 16 throughout travel of the receiver between the seated and the unseated positions. The tray floor 82 and back wall 84 also are cut away to accommodate the chassis pedestal 56 and the transducer unit 24. A further cut-away 96 in the back wall 84 and floor 82 accommodates write-protect and disk-in sensors, which are conventional in disk drives.

The receiver 14 has three slide elements, shown in FIGURES 2 and 5-8, that operatively engage the three support elements formed on the chassis 26. One such slide element is a slide tab 86a projecting outward from the tray sidewall 86. A second is a symmetrically located slide tab 88a projecting out from the sidewall 88. Each slide tab 86a, 88a is slidingly seated on one slide surface 46a, 48a and abutted against one stop surface 46c, 48c when the receiver 14 is in the unseated position, of FIGURES 3, 6 and 8. Each slide tab slides along a ramp slide surface 46a, 48a from this unseated position to the seated position of FIGURES 4, 5 and 7. In that position, each slide tab is abuttingly engaged behind and against a stop surface 46b, 48b.

The third receiver slide element is a saddle 98, shown in FIGURE 5 and the detail of FIGURE 5A, of U-shaped cross-section at the back end of an arm 100 which projects rearwardly on the tray 68. The saddle seats on the slide surface 40a of the chassis rail 40. The saddle 98 abuts the stop surface 40b when the receiver is in the seated position, FIGURE 5, and is spaced forward of the stop surface when in the unseated position, FIGURE 6.

The receiver tray 68 connects to the springs 64 and 66 by way of downwardly-projecting hooked levers 102 and 104, respectively, shown in FIGURES 2, 5 and 6.

With this construction, the receiver tray 68 seats flat on the chassis platform front section 34a when in the seated position shown in FIGURES 4, 5 and 7. The chassis pedestals 52, 54 and 56 and motor drive chuck 16 project upward above the tray floor, thereby to position the elevation of a memory disk directly by means of these elements of the chassis 26 and not by elements of the receiver 14. The receiver functions instead to transport the disk to and from these and other elements of the disk drive. The seated receiver tray is held in the seated position by the abutting engagement of the forward edges of the slide tabs 86a and 88a against the stop surfaces 46b and 48b, respectively. The tray is prevented from further backward movement by the consequent abutment of the slide saddle 98 against the rail stop surface 40b.

In the seated position, the two springs 64 and 66 are tensioned as appears in FIGURE 5. The spring force acts both forward, i.e. to the right in FIGURE 5, and downward, i.e. downward in FIGURE 5. This spring force exerts a resilient bias which is resisted by the engagement of the slide tabs 86 and 88 behind the stop surfaces 46b and 48b, and by the tray resting on the platform front section 34a. The spring forces thus exert a counter-clockwise torque, when viewed in FIGURE 5, on the receiver tray relative to the engagement of the tray tabs 86a and 88a with the chassis 26. This rotational force tends to press the tray saddle 98 downward on the rail 40, which resists the rotational movement of the receiver tray. The hooked levers 102, 104 provide moment arms that enhance this tray-seating rotational force.

A user readily releases the receiver 14 from the seated position by imposing an upward force on the lip 90 at the forward edge of the receiver tray, as appears in FIGURES 1A and 5. This simple upward force tilts the tray upward and lifts the tray slide tabs 86a and 88a free of the stop surfaces 46b and 46c. The forward bias of the tensioned springs 66 and 68 thereupon promptly slides the receiver tray forward, with the slide tabs 86a and 88a slidably engaging the ramp surfaces 46a and 48a, and with the tray saddle 98 sliding on the rail surface 40a. This forward movement, preferably upwardly inclined due to the incline of the ramp surfaces 46a and 48a, brings the receiver to the unseated position of FIGURES 3, 6 and 8, where the slide tabs 86a and 88a abuttingly engage the stop surfaces 46c and 48c, respectively. It will be noted that the initial upward movement of the slide tray to release it from the seated position raises a disk seated on the tray above the chassis pedestals 52, 54 and 56 and above the chuck spindle 16b. The disk 12 accordingly is free to move forward to the unseated position without resistance, with the receiver tray.

In the unseated position, the front lip 90 of the receiver tray projects forward beyond the bezel or other front panel of the disk drive, as appears in FIGURE 1A. Accordingly, a disk seated on the receiver tray is readily accessible for removal by a user and a further disk is readily placed on the tray. After a disk is placed on the tray, a user moves the receiver from the unseated position to the seated position simply by pressing on the lip 90, as designated with the arrow in FIGURES 1B and 6. This simple pressing force slides the receiver tray backward into the disk drive, against the tension of the springs 64 and 66, until the slide tabs 86a, 88a pass beyond the back edges of the ramp surfaces 46a and 48a, whereupon the downward force of the taut springs 64 and 66 in effect snaps the receiver tray vertically downward onto the chassis platform front section 34a, and hence to the fully-seated position.

The receiver tray cover 80, shown in FIGURE 2 but absent from FIGURES 3 and 4, fastens to tray side walls 86 and 88 and overlies at least a central portion of the tray to overlie the drive chuck 16 when the receiver is seated. The cover 80 prevents a memory disk 12 from becoming unduly spaced above the tray floor 82. Note that some spacing of the disk above the tray floor is attained when the receiver is seated and the disk is supported by the chassis pedestals and drive chuck. However, the tray cover 80 prevents an unduly larger spacing.

When the receiver 14 is seated, the spring 60c of the pressure pad assembly 60 spans over one of two rearwardly-extending panels 80a of the illustrated cover to dispose the pad 60a between the two panels 80a for engagement with a record disk, as FIGURE 4 indicates. Movement of the receiver to the unseated position raises the cover 80 against the spring 60c. This action selectively releases the pad 60a upward from the disk.

A further feature of the disk drive 10 is that the foregoing seating and unseating movement of the receiver 14 directly shifts the transducer unit 24 to engage a memory disk and, alternatively, to release the disk for removal and replacement. See FIGURES 2, 3 and 4. The illustrated receiver provides this operation with a slide actuator 106 on the tray arm 100 which engages a slide follower 108 on the hinged arm member 20 of the transducer unit. The slide actuator 106 has a raised lifting surface 106a at the back end of the receiver tray arm 100 and has a downwardly-inclined ramp 106b at the forward end of the lifting surface 106a. The lifting surface and the ramp are aligned with one another and extend together along the front-to-back direction of the disk drive, which is parallel to the direction in which the slide tabs 86a and 86b extend. Forward of the ramp 106b, the upper surface of the arm 100 is recessed to be free of the slide follower 108 of the transducer unit.

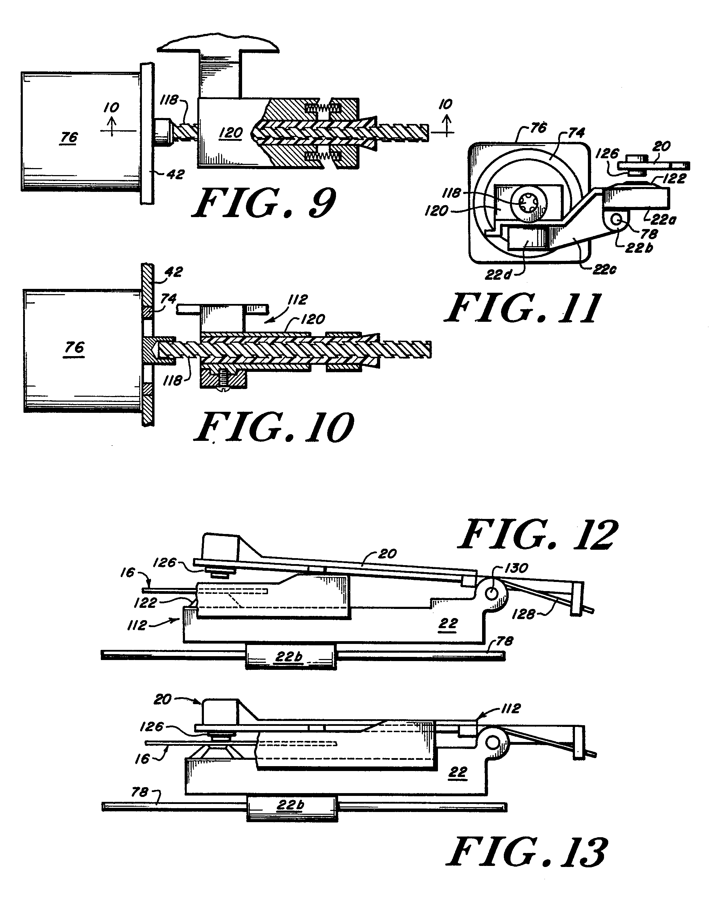

The transducer unit 24 of the illustrated disk drive 10 has, as FIGURES 2 through 4 show, a transducer-carrying carriage 112 that slides on the guide rod 78 and is driven along the slide rod by a stepping mechanism. The illustrated stepping mechanism employs the positioning drive 76, e.g. a rotary motor, which drives a lead screw 118 on which is seated a follower nut 120 which is fastened to the carriage 112. The positioning drive 76 is of conventional construction, and the lead screw 118 and follower nut, as well as other elements of the transducer unit 24, can have many constructions but preferably employ the structures described in the above-referenced application for patent entitled "Anti-backlash Nut And Head Positioner". FIGURES 9 and 10 show, respectively, side elevation and top views of such an arrangement of the transducer unit motor drive 76, lead screw 118, follower nut 120, and connection with the carriage body member 22.

The carriage 112, assembled with a lower body member 22 and the upper arm member 20, receives a disk 112 between a transducer and a pressure pad at the front ends of the members 20 and 22. The carriage will be described with specific reference to a construction which carries a single transducer head and hence can read and write with regard to only one side of a memory disk. However, features of the invention are equally applicable to a carriage 112 arranged for two-sided information-transferring operation. The illustrated carriage body member 22 has an elongated body 22a which carries a read/write transducer 122 (FIGURE 11) at the front end thereof and hingedly mounts the upper arm member 20 at the back end thereof. The body member 22 further has a journal housing 22b located between the transducer-carrying and hingedly-mounted ends and which mounts an axially-extending journal bearing that in turn seat on the guide rod 78, as shown in FIGURES 12 and 13.

A transverse arm 22c extends from the body member, at this intermediate location, to a socket that seats with and connects to the follower nut 120. A single threaded fastener 124 secures this connection. The mounting and structure of the carriage body member 22 locate the active surface of the read/write recording head, i.e. transducer 122, at a selected height relative to the plane where the chassis 26 locates a memory disk 16, as shown in FIGURES 12 and 13. More particularly, this elevational positioning provides the desired conventional slight elastic deformation of the memory disk as it passes over the transducer surface.

The carriage upper arm member 20, hingedly mounted to the body member 22 adjacent the back of the carriage 112, extends forward to mount a pressure pad 126 in registration over the transducer 112. See FIGURES 11, 12 and 13. A spring 128 is torsionally tensioned on the pin 130 which hingedly connects the arm member 20 to the body member 22 to produce a resilient torsional bias that urges the pressure pad 126 against the transducer 122.

The tab 108 extends laterally from the arm member 122 to form the slide follower that engages with the receiver slide actuator 106. This engagement lifts the arm member 20 from the normal operative disk-engaged position shown in FIGURE 13 to the disk released position shown in FIGURES 11 and 12. More particularly, when the receiver 14 is seated, FIGURE 4, the slide follower tab 108 is free of the receiver slide actuator 106, and the arm member is resiliently urged by the spring 128 to engage the pressure pad thereon with the upper surface of a memory disk and thereby urge the disk against the transducer on the carriage body member 22. However, when the receiver 14 first moves forward from the seated position, the slide actuator ramp 106b engages the carriage actuator tab 108 and thereby raises the carriage arm member 22 to the released position of FIGURE 12. Further forward movement of the carriage slides the receiver actuator lift surface 106a under the carriage follower tab 108, as appears in FIGURE 3. FIGURE 11 shows an end view of the foregoing transducer unit 24 when the arm member 20 is in the raised release position of FIGURE 12. The showing, for simplicity, is of the transducer unit separate from other elements of the disk drive 10.

The disk drive 10 locates a memory disk 12 on the drive chuck 16 with high repeatable accuracy, and seats it on the chuck for driven rotation therewith, with a disk hub and chuck structure of which a preferred form is described in the above-referenced application for patent entitled "Disk Memory Apparatus". Other disk-chuck arrangements are, however, available in the art which may be used.

The disk drive 10 thus provides highly accurate and precise locating of a driven disk-receiving chuck relative to a disk-engaging read/write transducing unit. A single unitary disk drive mounting chassis having a relatively small number of precision surfaces directly mounts the motor elements and the transducer unit elements to provide this repeatable, high tolerance positioning.

Further, the disk drive supportingly locates a disk seated therein with a distributed arrangement of pedestal surfaces on the unitary chassis.

The disk drive transports a disk into this precisely-located seated position by means of a simple mechanism that operates with a single manual action and without resort to solenoids or other automated or powered devices. The receiver which provides this mechanical action employs a simply constructed covered receiver tray which is resiliently biased into one position and securely latches in the other position with assistance from the same resilient bias. That is, the illustrated springs which urge the receiver tray forward to the unseated position also urge the tray downward for automatic latching to the seated position. The receiver which provides this disk transporting concurrently directly operates the transducer unit for selectively releasing a memory disk, and the protective disk envelope as conventionally used, to assure ready removal and replacement of a disk with the disk drive. A second spring or like bias element urges the transducer unit to the operative disk-engaging position and the release of the disk-carrying receiver from the seated position automatically shifts the transducer unit to a disk-releasing position.

It will thus be seen that the objects set forth above, among those made apparent from the preceding description, are efficiently attained. Since certain changes may be made in the above constructions without departing from the scope of the invention, it is intended that all matter contained in the above description or shown in the accompanying drawings be interpreted as illustrative and not in a limiting sense. It is also to be understood that the following claims are intended to cover all of the generic and specific features of the invention herein described, and all statements of the scope of the invention which, as a matter of language, might be said to fall therebetween.

Having described the invention, what is claimed as new and secured by Letters Patent is:

CLAIMS

1. Disk drive apparatus having chassis means mounting disk receiver means, disk motor means for drivingly engaging a memory disk carried on said receiver means, and positionable transducer means for information transferring engagement with a memory disk carried on said receiver means, said disk drive apparatus having the improvement comprising

A. first, second and third support means triangularly arranged on said chassis means for supporting said receiver means for relative sliding movement and for locating said receiver means in a seated engaged position where a memory disk carried on said receiver means is positioned for driving engagement with said motor means and for information transferring engagement with said transducer means, and, alternatively, in an unseated disengaged position where a memory disk carried on said receiver means is disengaged from said motor means and from said transducer means and is disposed for unloading from said disk drive,

B. first, second and third slide means triangularly arranged on said receiver means for engagement with said same-numbered support means respectively and slidable relative thereto between said seated position and said unseated position, said slide means being further arranged for receiver locating engagement with said support means in each of said seated position and said unseated position, and

C. resilient bias means coupled between said chassis means and said receiver means for urging said receiver means into said unseated position and, upon sliding of said receiver means fully toward said seated position, into said seated position.

2. Disk drive apparatus according to claim 1 having the further improvement comprising

A. disk-centering means carried on said motor means for engagement with a memory disk carried on said seated receiver means, and

B. disk-supporting means on said chassis means for supportingly engaging a memory disk carried on said seated receiver means, and

C. said receiver means being further arranged for carrying a memory disk to said centering means and to said supporting means when in said seated position and for removing the disk therefrom when in said unseated position.

3. Disk drive apparatus according to claim 1 having the further improvement in which said bias means includes means for resiliently urging each of said first, second and third slide means into engagement with said same-numbered support means respectively when said receiver means is both in said seated position and in said unseated position.

4. Disk drive apparatus according to claim 1 having a width dimension corresponding to the diameter of the memory disk to be carried on said receiver means, having a depth dimension transverse thereto and in the plane of the memory disk carried on said receiver means, and having a height dimension transverse to both said width and said depth dimensions, and having the further improvement in which said support means includes means for successively translating said receiver means along said depth dimension upon movement thereof from said unseated position toward said seated position and for shifting said receiver means along the height dimension to locate said receiver means in said seated position.

5. Disk drive apparatus according to claim 1 having a width dimension corresponding to the diameter of the memory disk to be carried on said receiver means, having a depth dimension transverse thereto and in the plane of the memory disk carried on said receiver means, and having a height dimension transverse to both said width and said depth dimensions, and having the further improvement in which said first and second support means are laterally spaced apart on said chassis means along said width dimension and said first and second slide means are correspondingly spaced apart on said receiver means.

6. Disk drive apparatus according to claim 1 having a width dimension corresponding to the diameter of the memory disk to be carried on said receiver means, having a depth dimension transverse thereto and in the plane of the memory disk carried on said receiver means, and having a height dimension transverse to both said width and said depth dimensions, and having the further improvement in which said receiver means includes a tray-like structure carrying said first, second and third slide means and movable relative to said chassis means between said seated and said unseated positions.

7. Disk drive apparatus according to claim 1 having the further improvement in which

A. said transducer means has opposed disk-engaging members arranged for engaging opposite sides of a memory disk carried on the seated receiver means and alternatively for releasing the disk from said engagement, and

B. in which said receiver means includes mechanical actuator means for engagement when in said seated position, but not in said unseated position, with said transducer means for causing said disk engaging members to assume said disk releasing condition.

8. Disk drive apparatus according to claim 1 having the further improvement

A. in which said chassis means includes a one-piece structure mounting said transducer means, said receiver means, and

B. in which said motor means includes a motor stator mounted to said chassis structure and further includes a bearing-carried rotor mounted directly to said chassis structure.

9. Disk drive apparatus according to claim 8 having the further improvement in which said chassis structure includes hollow tubular support means mounting said rotor-carrying bearings on a tubular inner surface thereof.

10. Disk drive apparatus according to claim 5 having the further improvement in which

A. said first and second support means are disposed in alignment with one another and are spaced along the depth dimension from said third support means, and

B. said bias means exerts resilient action between said chassis means and said receiver means at a location on said receiver means intermediate, along said depth dimension, said third support means and said aligned first and second support means.

11. Disk drive apparatus according to claim 5 having the further improvement in which said bias means includes first and second spring elements, each connected between said chassis means and said receiver means, said spring elements being spaced apart along said width dimension.

12. Disk drive apparatus having disk driving motor means, selectively positionable informationtransferring transducer means with first and second opposed member for engaging opposite sides of a memory disk for transducing operation therewith, and housing means mounting said motor means and mounting said transducer means, said apparatus having the improvement comprising

A. chuck means on said motor means engageable with a memory disk for selective positioning and rotation of the memory disk,

B. shift means connected with at least said first member for shifting that member relative to said second member from operative disk-engaging position to a disk-releasing position, and

C. receiver means on said housing means, said receiver means being arranged for removably and replaceably receiving a memory disk and movable with said disk relative to said housing means between a seated position where the disk carried with said receiver means is in said engagement with said chuck means and is positioned for said operative engagement with said transducer means, and an unseated position where the disk carried with said receiver means is removed from said engagement with said chuck means and is removed from said operative engagement with said transducer means,

D. said receiver means including actuator means for engagement with said shift means for shifting said first member to said release position when said receiver means is in a position other than said seated position.

13. Disk drive apparatus according to claim 12 having the further improvement in which said receiver means has manually-engageable means disposed for user engagement in both said seated position and said unseated position, said receiver means responding to a first substantially lineal movement of said engageable means for moving from said seated position to said unseated position and responding to a second substantially lineal movement of said engageable means for moving from said unseated position to said seated position.

14. Disk drive apparatus according to claim 12 having the further improvement comprising resilient bias means engaged between said receiver means and said housing means and resiliently biasing said receiver means into both said seated position and said unseted position, and further comprising guide means on said housing means engaged with slide means on said transducer means for releasably maintaining said receiver means in each of said seated position and said unseated position.

15. Disk drive apparatus according to claim 12 having the further improvement comprising second resilient bias means engaged between said first and second opposed members and resiliently biasing said members to said disengaging position.

0110323

FIG. 1A

FIG. 1B

FIG. 1C

0110323

**FIG. 2**

0110323

**FIG. 3**

**FIG. 4**

**FIG. 5**

**FIG. 5A**

**FIG. 6**

**FIG. 7**

**FIG. 8**

0110323

*FIG. 9*

*FIG. 10*

*FIG. 11*

*FIG. 12*

*FIG. 13*

FIG . 14

FIG . 15

## DOCUMENTS CONSIDERED TO BE RELEVANT

EP 83111734.6

| Category | Citation of document with indication, where appropriate, of relevant passages | Relevant to claim | CLASSIFICATION OF THE APPLICATION (Int. Cl. ³) |
|---|---|---|---|
| A | DE - A1 - 2 457 545 (OLIVETTI)<br>* Fig. 1-11; claims 1-14 * | 1,2,4-7,12,13 | G 11 B 17/02 |
| A | DE - A1 - 2 754 298 (RCA)<br>* Fig. 1-16; claims 1-11 * | 1,2,4-6,10,12,13 | |
| A | DE - A1 - 2 853 216 (IBM)<br>* Fig. 1-5; claims 1-19 * | 1,2,4-7,10,12,13 | |
| A | DE - A1 - 3 026 432 (SHIBAURA)<br>* Fig. 1-12; claims 1-10 * | 1,3-6,12,13 | |
| A | DE - A1 - 2 756 843 (RCA)<br>* Fig. 7-9; page 19, lines 10-17 * | 1,4-6 | **TECHNICAL FIELDS SEARCHED (Int. Cl. ³)**<br><br>G 11 B 17/00<br>G 11 B 21/00 |

The present search report has been drawn up for all claims

| Place of search | Date of completion of the search | Examiner |
|---|---|---|
| VIENNA | 29-02-1984 | BERGER |